# EUROPEAN PATENT SPECIFICATION

(11) **EP 3 753 378 B1**
(45) Date of publication and mention of the grant of the patent: **20.10.2021**
(21) Application number: 19703369.9
(22) Date of filing: 13.02.2019
(51) Int. Cl.: H05B 6/10, B29C 45/74, H05B 6/36

(54) **INDUCTOR FOR ELECTROMAGNETIC INDUCTION HEATING FOR PLASTICIZING CYLINDERS**
INDUKTOR FÜR ELEKTROMAGNETISCHE INDUKTIONSHEIZUNG ZUM PLASTIFIZIEREN VON ZYLINDERN
BOBINE D'INDUCTION POUR CHAUFFAGE PAR INDUCTION ÉLECTROMAGNÉTIQUE POUR CYLINDRES DE PLASTIFICATION

(30) Priority: 16.02.2018 IT 201800002737
(43) Date of publication of application: 23.12.2020
(73) Proprietor: Atos S.P.A., 20122 Milano (IT)
(72) Inventor: MESCHIA, Maurilio, 14100 Asti (IT); CARRESE, Gennaro, 1DTO, 4710-043 Freguesia de de Gualtar Concelho de Braga (PT); MILELLA, Gregorio, 10093 Collegno (Torino) (IT)
(74) Representative: Petruzziello, Aldo
(86) International application number: PCT/EP2019/053487
(87) International publication number: WO 2019/158551

(56) References cited:
- CN-Y- 2 853 373
- US-A- 2 381 866

## Description

The present invention relates to an inductor for an electromagnetic induction heating system suitable for use on plasticizing cylinders, having such a shape as to induce a field mainly transverse to the cylinder.

### State of art

The plastics processing machines are equipped with a plasticizing cylinder consisting of a cylinder and a plasticizing screw inside it, which can rotate (extruders) or rotate and move axially (injection machines or similar machines). In the case of extruders, the plasticizing cylinder can also be equipped with two co-rotating or counter-rotating plasticizing screws.

Said cylinder is equipped with one or more feed holes for the raw material and in some cases with a series of escape holes for gases and vapors (degassing holes). This cylinder is connected on one side to the mechanical structure of the machine and to the actuation systems of the plasticizing screw while on the exit side of the plastic material it is connected to a head or other elements suitable for the process of the machine itself (extrusion heads, filters, nozzle carrying heads, nozzles, ..).

Outside the cylinder there are installed a series of heating bands generally of the resistive type in a variable number depending on the length of the cylinder and the possibility of creating temperature gradients along the cylinder axis. These heating bands consist of an electric mica or ceramic insulation and an alloy heating filament suitable for high temperatures. The heating element further includes an electrical connection box and a connection cable to the power unit.

In Figure 1, by way of explanation, a plasticizing unit (100) is shown, provided with three heating elements 1 previously described without the control elements of the plasticizing screw, the supporting structure of the cylinder itself and the members connected to the exit zone of the plastic material.

As an alternative to resistive heating systems, electromagnetic induction heating systems for plasticizing cylinders have also been developed.

Figure 2 shows the structure and the inductors which constitute an electromagnetic induction heating system of a plasticizing unit (200) with inductors 2 having solenoid-shaped coils 3 around the plasticizing cylinder 5.

The variable magnetic field is induced by the oscillating currents that travel the coils 3 with a frequency between 1 kHz and 30 kHz; the currents are produced by generators not shown in the accompanying figures, and whose description is not relevant for the purposes of the invention.

Heating takes place due to the parasitic currents induced by the variable electromagnetic field in the plasticizing cylinder. The plasticizing cylinder must be constructed of conductive material, preferably of ferromagnetic material, to maximize the transferred power.

This type of heating has the advantage of not requiring contact between the electromagnetic induction coil 3 and the laminating cylinder 5 because the induced currents do not depend substantially on the space between the coil and the cylinder.

The induction coil 3 is at a temperature lower than that of the heated element, in contrast to the resistive heating bands. The power dissipated in the coil is due only to the resistive losses produced by the current that circulates in the inductor.

The electromagnetic induction coil 3 is wound on a non-magnetic insulating element 4 which has the purpose of supporting the electromagnetic induction coil 3 and of thermal insulation towards the cylinder 5.

The electromagnetic induction heating systems (200) of the plasticizing cylinders have some important advantages with respect to the heating systems of the resistive type (100):
- with the electromagnetic induction heating the heat is generated directly in the element to be heated;
- with the electromagnetic induction heating the element with the highest temperature is the plasticizing cylinder, while in the case of heating by means of resistive elements, the element at higher temperature is the resistive heater;
- with the electromagnetic induction heating it is possible to provide a simpler and more effective thermal insulation of the plasticizing cylinder;
- with the electromagnetic induction heating, by directly heating the element to be heated, there are no delays or inertias determined by the heater mass and by the thermal resistance between the resistive heating element and the heated element; this results in a better dynamic response of the system and an easier temperature regulation.

The solution of electromagnetic induction heating systems according to the known art with solenoid induction coil inductor (200) has a characteristic of generating heat, not limiting with respect to the heating system with electric band resistors, due to the skin effect, predominantly close to the outer surface of the cylinder; consequently, to transfer the heat inwards, where it is used to plasticize the plastic material, a thermal gradient is created between the outside and the inside of the cylinder.

For the frequency range used (1 kHz - 30 kHz) the 90% heat generation occurs within a thickness of 1 mm from the surface.

It would be preferable to be able to overcome this feature to make the temperature in the cylinder more homogeneous and to generate heat mainly in the area of use.

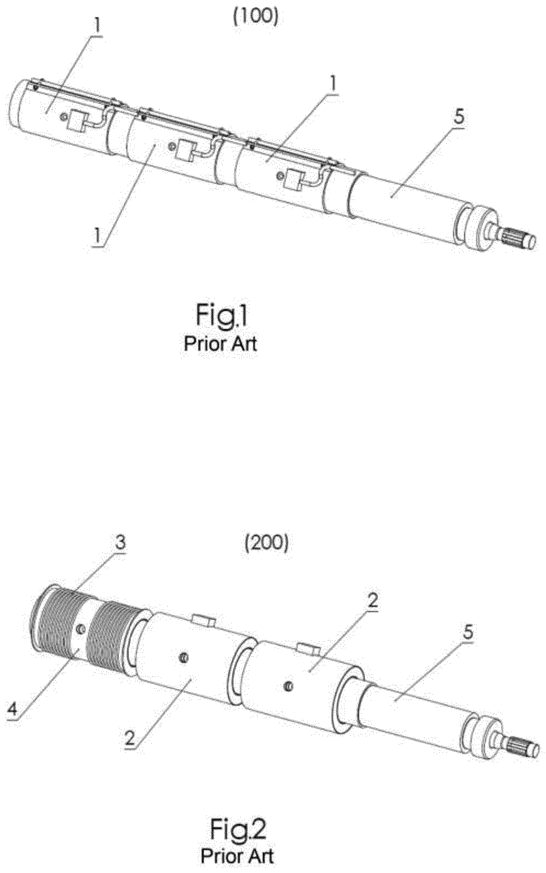

US 2381866 describes (fig.1) a heating solution by means of a coil wound around the cylinder, crossed by an alternating current at a frequency between 1000 and 3000 Hz such as to induce in the cylinder parasitic currents which heat the plasticizing cylinder.

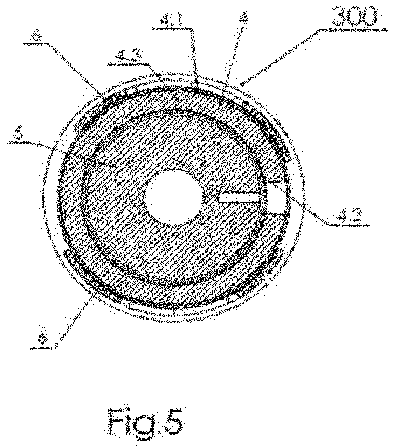

This document also describes a configuration (fig. 5, 6 and 7) in which there are two coils in the form of opposed windings on the surface of the plasticizing cylinder and shaped thereon, and inside the cylinder a series of low resistivity bars arranged in a configuration similar to a squirrel cage winding of the rotor of an induction motor. The coils on the cylinder are crossed by a low-frequency current, typically at 60 Hz, which induces a high current that produces heating in the internal coil as in the induction motors.

The proposed configuration provides for its operation also the presence of the inner coil shaped like a squirrel cage.

CN 2853373 describes a configuration in which a double spiral coil is fixed on two semi-cylindrical structures which in turn are fixed to the plasticizing cylinder. These coils have a pancake structure with a winding that extends from the center to the periphery, leaving no free space.

US2381866 relates to an inductor for electromagnetic induction heating according to the features of the preamble of claim 1.

### Object of the invention

The object of the invention is to eliminate the drawbacks and problems of the different solutions of the prior art illustrated above.

In particular, an object of the invention is to provide an inductor solution suitable for electromagnetic induction heating of plasticizing cylinders capable of generating an electromagnetic field which penetrates deep into the plasticizing cylinder, such that the induced currents produce a generation of heat even in areas near the inside diameter of the plasticizing cylinder.

Another object of the invention is to provide a solution that can be adapted to the different configurations of external diameter and internal diameter of the plasticizing cylinders, in order to optimize the distribution of the electromagnetic field in the areas close to the internal diameter.

Still another object of the invention is to preserve all the advantages of the electromagnetic induction heating solution with inductor according to the prior art, combining the undoubted advantage relative to the method of installation and assembly of resistive heating systems.

These objects are achieved by the inductor for the electromagnetic induction heater according to the invention which has the characteristics of the appendent independent claim 1.

Advantageous embodiments of the invention appear from the dependent claims.

Substantially, the inductor for the electromagnetic induction heater according to the invention is defined by the features of claim 1.

In this way the field lines avoid cutting the coil conductor reducing the self-heating phenomenon.

### Brief description of the figures

Further characteristics of the invention will be made clearer by the detailed description that follows, referring to purely exemplary and therefore non-limiting embodiments thereof, illustrated in the appended drawings, in which:
- Figure 1 is an axonometric side view of a plasticizing cylinder for plastic material processing machines according to the prior art, equipped with resistive heaters;
- Figure 2 is an axonometric view of a plasticizing cylinder for plastic material processing machines according to the prior art, provided with inductors with solenoid-type coils for inductive heating;

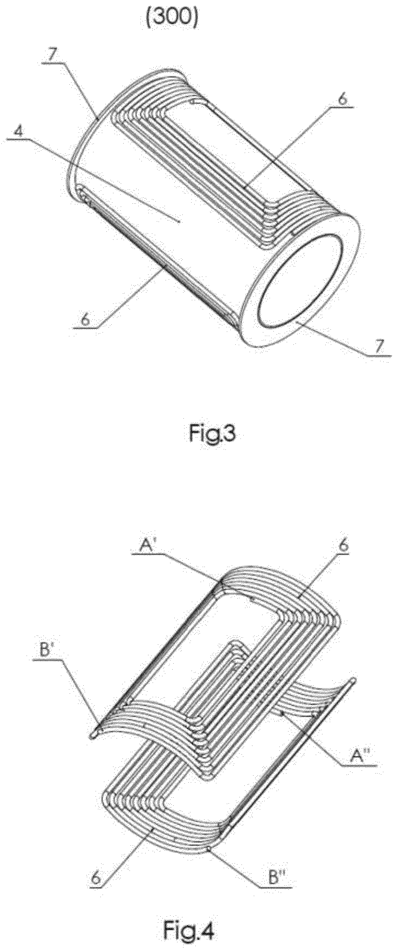

- Figure 3 is a view of an inductor according to the invention;
- Figure 4 is a view of the basic configuration of the inductor coils according to the invention;
- Figure 5 is a cross-sectional view of the inductor according to the invention;

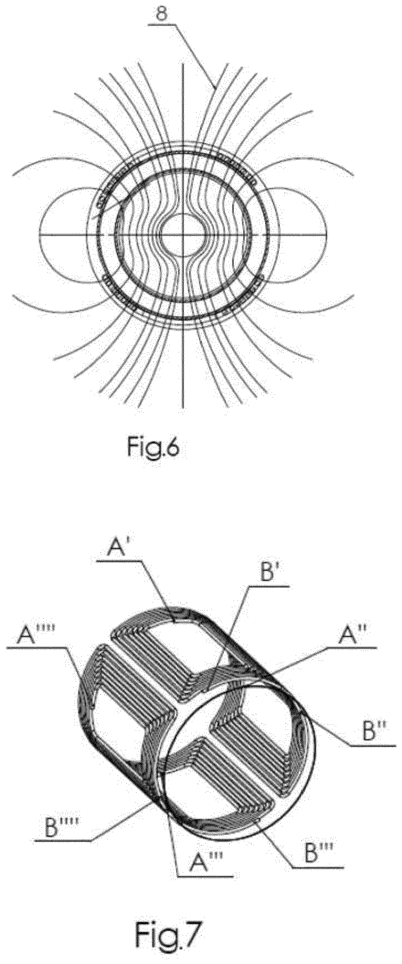

- Figure 6 is a representation of the magnetic induction field pattern produced by an inductor with two coils according to the invention;
- Figure 7 is a view of the configuration with four coils of an inductor according to the invention;

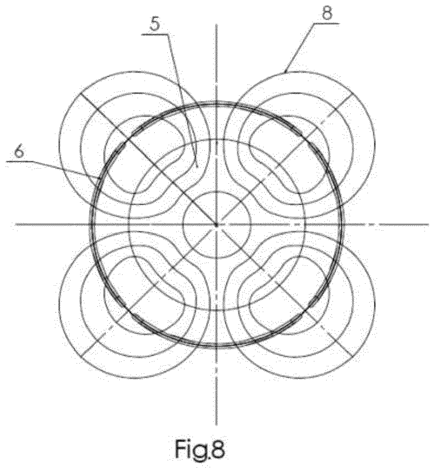

- Figure 8 is a representation of the magnetic induction field produced by the inductor with four coils according to the invention;

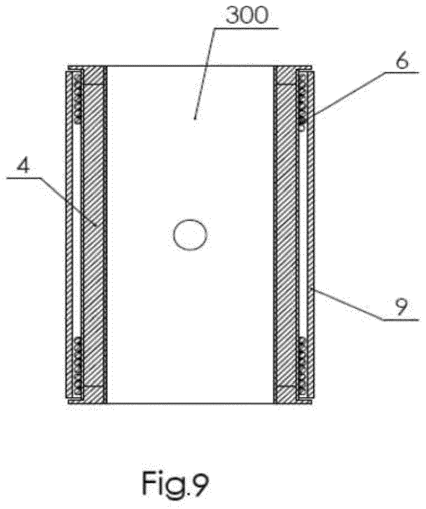

- Figure 9 is a sectional view of the inductor according to the invention with an external ferrite shield;

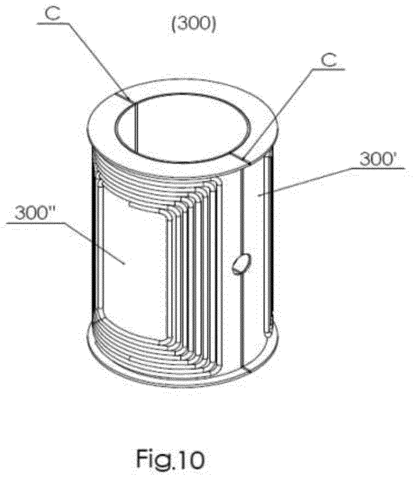

- Figure 10 is a representation of an alternative solution for the inductor in which the elements which constitute it, with the exception of the coils, are divided into two parts by a plane passing through the axis of the inductor.

### Description of preferred embodiments

With reference to the accompanying figures, and for now in particular to figure 3 an inductor for electromagnetic induction heating according to the present invention is shown, in its basic structure common to all the different configurations, globally indicated by the reference number (300), without closing cover.

The inductor for electromagnetic induction heating consists substantially of an internal support and insulation element 4, made of non-magnetic and electrically non-conductive material, to be placed on the plasticizing cylinder, of two or more coils 6, made with an electric conductor, in an even number, arranged symmetrically with respect to the cylinder, with axis perpendicular to the axis of the cylinder to be heated, so as to generate an electromagnetic field transverse to the cylinder, two protection elements 7 at the two ends of the assembly.

Figure 4 is a schematic representation of the basic configuration of the two identical spiral wound coils 6 and their spatial positioning. The coils 6 have a flat spiral structure conformed to the surface of the cylinder, such as to leave a free area inside the coil as large as possible, compatible with the dimensions thereof and the number of turns for the passage of the magnetic field lines. In this way the field lines avoid cutting the coil conductor reducing the self-heating phenomenon.

In the figure, the terminals of the coils are indicated with: A' internal terminal, B' external terminal for the first coil and A" and B" for the second coil. The coil 6 is curved in such a way as to adapt to the support 4 placed on the plasticizing cylinder.

Figure 5 is a sectional representation of the inductor assembly (300) and of the plasticizing cylinder 5. The structure of the support element 4 is constituted by an external cylindrical element 4.1 made of non-magnetic and electrically non-conductive insulating material, whose function is to support the coils 6, an intermediate cylindrical element 4.3 made of non-magnetic and electrically non-conductive insulating material, whose function is thermal insulation, and an internal cylindrical element 4.2 made of non-magnetic and electrically non-conductive insulating material, the function of which is support for the whole assembly.

With reference to Figure 4, connecting the external terminals B' and B" to each other, of two identical coils (6), and supplying the coils with a suitable generator between the internal terminals A' and A" a magnetic induction field is generated transversely crossing the plasticizing cylinder, of which figure 6 provides a schematic representation.

The generation of a magnetic induction field 8, in figure 6, which passes through the cylinder and tends to concentrate on the internal diameter causes the parasitic currents to be distributed inside the cylinder and that the generation of heat takes place mainly in the area around the internal diameter.

FIG. 7 provides a schematic representation of a four-coil configuration for the case of a larger outer diameter cylinder. In this case connecting each other the terminals B' and B" of the first two coils and the terminals B''' and B"" of the other two coils and feeding the coils thus coupled between the terminals A' and A" and between A'", A"", a pattern of the magnetic induction field lines 8 in the plasticizing cylinder 5 is obtained, a representation of which is given in Figure 8.

In a similar way, internal terminals A can be connected to each other and the external terminals B can be supplied.

Similar configurations of magnetic induction field lines are possible with an even number of coils greater than four.

Figure 9 provides a sectional representation of the inductor assembly (300), consisting of two coils 6 internally supported by the electrically insulating and non-magnetic element 4 and completed externally by a ferrite casing 9. The purpose of the outer ferrite cylinder 9 is to create a low reluctance path for the magnetic induction field outside the inductor (300). This configuration allows to effectively shield the inductor (300) avoiding field dispersion with very low efficiency losses since the ferrite is non-conductive.

To simplify the construction, the screen 9 can be made by assembling several parallelepiped or semi-cylinder ferrite elements contained in a structure of non-conductive and non-magnetic material.

Figure 10 provides a representation of an alternative solution for the inductor (300); in this solution all the elements constituting the inductor with the exception of the coils are divided by a median plane so as to form two partially separable elements 300' and 300", except for the conductor connecting the two coils. With this solution a direct mounting on the plasticizing cylinder is allowed without having to fit the inductor from one end of the plasticizing cylinder, as in the case of the solenoid inductor.

A further version of the inductor (300) provides that all the elements which constitute the internal support element 4 are flexible and open on a generatrix of the inductor cylinder.

Advantageously, in this case, the ferrite screen 9 is constructed with sufficiently small ferrite elements contained in a flexible non-magnetic and non-conductive material structure and is open on a generatrix line of the inductor cylinder. With this solution, direct mounting on the plasticizing cylinder is allowed by wrapping the inductor on the cylinder.

Naturally, the invention is not limited to the particular embodiments previously described and illustrated in the accompanying drawings, but numerous detail modifications can be made to it, within the reach of a person skilled in the art, falling within the scope of the invention defined by the attached claims.

## Claims

1. Inductor for electromagnetic induction heating (300) of a plasticizing cylinder (5), comprising an even number of two or more identical coils (6), made of an electric conductor, arranged on an internal support element (4) of thermal insulation towards the cylinder (5), and made of non-magnetic and non-conductive material, said coils (6), each having an internal terminal (A) and an external terminal (B), wherein
- the winding direction is the same for all coils,
- the winding axis of the coils (6) is perpendicular to the axis of the cylinder (5) to be heated,
- the coils are mounted symmetrically to the cylinder axis to be heated and angularly equidistant,
- the adjacent external (B) or internal (A) terminals of the coils (6) are connected to each other and the internal (A) or external (B) terminals are electrically powered, so as to generate an electromagnetic field transverse to the cylinder (5),
- all the elements constituting the inductor are open on a generatrix line of the plasticizing cylinder,
**characterized in that:**
said coils (6) have a spiral structure conformed to the surface of the cylinder (5), such as to leave a free area inside the coil;
said supporting element (4) consists of an internal support element (4.2), made of non-magnetic and electrically non-conductive material, disposed towards the cylinder (5) to be heated, of an intermediate thermal insulation element (4.3) made of non-magnetic and electrically non-conductive material, and of an external element (4.1) for supporting the coils in non-magnetic and electrically non-conductive material;
all the elements constituting the inductor are flexible.

2. Inductor for electromagnetic induction heating (300) according to any of the previous claims, **characterized in that** a ferrite shield (9) is placed outside the coils (6).

3. Inductor for electromagnetic induction heating (300) according to claim 2, **characterized in that** said ferrite screen (9) is made of ferrite elements contained in a flexible non-conductive and non-magnetic material structure and is open on a generatrix line of the plasticizing cylinder.

## Patentansprüche

1. Induktor für elektromagnetische Induktionsheizung (300) eines Plastifizierzylinders (5), umfassend eine gerade Anzahl von zwei oder mehr identischen Spulen (6), die aus einem elektrischen Leiter hergestellt sind, auf einem inneren Stützelement (4) von Wärmeisolierung zum Zylinder (5) hin angeordnet sind und aus nichtmagnetischem und nichtleitendem Material hergestellt sind,
wobei die Spulen (6) jede einen internen Anschluss (A) und einen externen Anschluss (B) aufweisen, wobei
- die Wicklungsrichtung für alle Spulen dieselbe ist,
- die Wicklungsachse der Spulen (6) senkrecht zur Achse des Zylinders (5), der erhitzt werden soll, steht,
- die Spulen symmetrisch zur Achse des Zylinders, der erhitzt werden soll, und winklig abstandsgetreu angebracht sind,
- die benachbarten externen (B) oder internen (A) Anschlüsse der Spulen (6) miteinander verbunden sind und die internen (A) oder externen (B) Anschlüsse elektrisch betrieben werden, um ein elektromagnetisches Feld querverlaufend zum Zylinder (5) zu erzeugen,
- die Elemente, die den Induktor bilden, alle auf einer Mantellinie des Plastifizierzylinders offen sind,
**dadurch gekennzeichnet, dass**:
die Spulen (6) eine Spiralstruktur aufweisen, die konform zur Oberfläche des Zylinders (5) ist, um einen freien Bereich innerhalb der Spule zu belassen;
das Stützelement (4) aus einem inneren Stützelement (4.2), das aus nichtmagnetischem und elektrisch nichtleitenden Material hergestellt ist und zum Zylinder (5), der erhitzt werden soll, hin angeordnet ist, aus einem zwischenliegenden Wärmeisolationselement (4.3), das aus nichtmagnetischem und elektrisch nichtleitenden Material hergestellt ist, und aus einem äußeren Element (4.1) zum Stützen der Spulen in nichtmagnetischem und elektrisch nichtleitenden Material besteht;
die Elemente, die den Induktor bilden, alle flexibel sind.

2. Induktor für elektromagnetische Induktionsheizung (300) nach einem der vorhergehenden Ansprüche, **dadurch gekennzeichnet, dass** eine Ferritabschirmung (9) außerhalb der Spulen (6) angeordnet ist.

3. Induktor für elektromagnetische Induktionsheizung (300) nach Anspruch 2, **dadurch gekennzeichnet, dass** die Ferritabschirmung (9) aus Ferritelementen hergestellt ist, die in einer flexiblen nichtleitenden und nichtmagnetischen Materialstruktur enthalten sind, und auf einer Mantellinie des Plastifizierzylinders offen ist.

## Revendications

1. Bobine d'induction pour un chauffage par induction électromagnétique (300) d'un cylindre de plastification (5), comprenant un nombre pair de deux ou plusieurs enroulements (6) identiques constitués d'un conducteur électrique, disposés sur un élément de support interne (4) d'isolation thermique vers le cylindre (5), et constitué d'un matériau non magnétique et non conducteur,
lesdits enroulements (6) comportant respectivement une borne interne (A) et une borne externe (B), dans laquelle
- la direction d'enroulement est la même pour tous les enroulements,
- l'axe d'enroulement des enroulements (6) est perpendiculaire à l'axe du cylindre (5) à chauffer,
- les enroulements sont montés symétriquement par rapport à l'axe de cylindre à chauffer et de façon angulairement équidistante,
- les bornes externes (B) ou internes (A) adjacentes des enroulements (6) sont reliées les unes aux autres et les bornes internes (A) et externes (B) sont alimentées électriquement, de manière à générer un champ électromagnétique transversal au cylindre (5),
- tous les éléments constituant la bobine d'induction sont ouverts sur une génératrice du cylindre de plastification,
**caractérisée en ce que** :
lesdits enroulements (6) présentent une structure en spirale adaptée à la surface du cylindre (5), de manière à garder une zone libre à l'intérieur de l'enroulement ;
ledit élément de support (4) consiste en un élément de support interne (4.2) constitué d'un matériau non magnétique et non conducteur électriquement, disposé vers le cylindre (5) à chauffer, d'un élément d'isolation thermique intermédiaire (4.3) constitué d'un matériau non magnétique et non conducteur électriquement, et d'un élément externe (4.1) destiné à supporter les enroulements dans le matériau non magnétique et non conducteur électriquement ;
tous les éléments constituant la bobine d'induction sont souples.

2. Bobine d'induction pour un chauffage par induction électromagnétique (300) selon l'une quelconque des revendications précédentes, **caractérisée en ce qu'**un blindage en ferrite (9) est placé à l'extérieur des enroulements (6).

3. Bobine d'induction pour un chauffage par induction électromagnétique (300) selon la revendication 2, **caractérisée en ce que** ledit blindage en ferrite (9) est constitué d'éléments en ferrite contenus dans une structure souple d'un matériau non magnétique et non conducteur électriquement et est ouvert sur une génératrice du cylindre de plastification.
